(19) Europäisches Patentamt European Patent Office Office européen des brevets

(11) **EP 3 933 979 B1**

(12) **EUROPEAN PATENT SPECIFICATION**

(45) Date of publication and mention of the grant of the patent:
**23.04.2025 Bulletin 2025/17**

(21) Application number: **20762064.2**

(22) Date of filing: **26.02.2020**

(51) International Patent Classification (IPC):
$H01M\ 4/36^{(2006.01)}$  $H01M\ 4/505^{(2010.01)}$
$H01M\ 4/62^{(2006.01)}$  $H01M\ 10/052^{(2010.01)}$
$H01M\ 10/0562^{(2010.01)}$  $C01G\ 45/12^{(2025.01)}$
$C01G\ 53/00^{(2025.01)}$

(52) Cooperative Patent Classification (CPC):
**H01M 4/366; C01G 53/44; C01G 53/50;
H01M 4/505; H01M 4/525; H01M 4/62;
H01M 10/0525; H01M 10/0562; C01P 2002/32;
C01P 2002/60; C01P 2002/85; C01P 2004/51;
C01P 2004/61; C01P 2004/84; C01P 2006/12;**
(Cont.)

(86) International application number:
**PCT/JP2020/007578**

(87) International publication number:
**WO 2020/175506 (03.09.2020 Gazette 2020/36)**

(54) **ACTIVE MATERIAL, POSITIVE ELECTRODE MIXTURE USING SAME, AND SOLID-STATE BATTERY**

AKTIVES MATERIAL, POSITIVELEKTRODENGEMISCH DAMIT UND FESTKÖRPERBATTERIE

MATÉRIAU ACTIF, MÉLANGE D'ÉLECTRODE POSITIVE UTILISANT LEDIT MATÉRIAU ET BATTERIE À L'ÉTAT SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2019 JP 2019034984**

(43) Date of publication of application:
**05.01.2022 Bulletin 2022/01**

(73) Proprietor: **Mitsui Mining & Smelting Co., Ltd.
Shinagawa-ku
Tokyo 141-8584 (JP)**

(72) Inventors:
• **OMURA, Jun**
  **Ageo-shi, Saitama 362-0021 (JP)**
• **WASHIDA, Daisuke**
  **Ageo-shi, Saitama 362-0021 (JP)**
• **MITSUMOTO, Tetsuya**
  **Takehara-shi, Hiroshima 725-0025 (JP)**
• **IDE, Hitohiko**
  **Ageo-shi, Saitama 362-0021 (JP)**
• **KOMODA, Yasuo**
  **Ageo-shi, Saitama 362-0021 (JP)**
• **SHIBATA, Yasuhiro**
  **Ageo-shi, Saitama 362-0021 (JP)**
• **TABIRA, Yasunori**
  **Ageo-shi, Saitama 362-0021 (JP)**
• **MAEDA, Tomoyuki**
  **Ageo-shi, Saitama 362-0021 (JP)**

(74) Representative: **Novagraaf Technologies
Bâtiment O2
2, rue Sarah Bernhardt
CS90017
92665 Asnières-sur-Seine Cedex (FR)**

(56) References cited:
EP-A1- 3 859 841      WO-A1-2017/150504
WO-A1-2018/012522      WO-A1-2019/035418
JP-A- 2010 080 407      JP-A- 2011 138 718
US-A1- 2015 270 537

- **VAN BOKHOVEN J. A ET AL: "Extended X-Ray Absorption Fine-Structure Spectroscopy", CHEMINFORM, 12 July 2005 (2005-07-12), Weinheim, pages no - no, XP055904851, Retrieved from the Internet <URL:https://anorg. chem.uu.nl/people/staff/FrankdeGroot/pub/124% 2004%20vanbokhoven%20ixas.pdf> [retrieved on 20220324], DOI: 10.1002/chin.200528239**
- **HEITJANS PAUL ET AL: "NMR and impedance studies of nanocrystalline and amorphous ion conductors: lithium niobate as a model system", FARADAY DISCUSSIONS, vol. 134, 1 January 2007 (2007-01-01), GB, pages 67 - 82, XP055931119, ISSN: 1359-6640, Retrieved from the Internet <URL:https://pubs.rsc.org/en/ content/articlepdf/2007/fd/b602887j> DOI: 10.1039/B602887J**
- **BAKTASH ARDESHIR ET AL: "Diffusion of lithium ions in Lithium-argyrodite solid-state electrolytes", NPJ COMPUTATIONAL MATERIALS, vol. 6, no. 1, 1 December 2020 (2020-12-01), XP055933055, Retrieved from the Internet <URL:https://d-nb.info/1222895358/34> DOI: 10.1038/s41524-020-00432-1**
- **NAKAO, AIKO; SAKUDA, ATSUSHI; TAKEUCHI, TOMONARI; OWADA, MASAHIRO; YAMANAKA, KEISUKE; OHTA, TOSHIAKI: "2G20 Surface Analysis for thin coating layer or LiNi1/3Co1/ 3Mn1/3O2 power for cathode by XAFS and XPS", THE 57TH BATTERY SYMPOSIUM IN JAPAN; CHIBA; NOVEMBER 29 - DECEMBER 1, 2016, vol. 57, 28 November 2016 (2016-11-28), pages 438, XP009529701**

(52) Cooperative Patent Classification (CPC): (Cont.)
H01M 4/131; H01M 2004/028; H01M 2300/0068;
Y02E 60/10

**Description**

Technical Field

The present invention relates to an active material used for a solid-state battery.

Background Art

A solid electrolyte used for a solid-state battery is expected to have a highest possible ionic conductivity and be chemically and electrochemically stable. For example, lithium halide, lithium nitride, lithium salts of acids, and derivatives thereof are known as candidates for the material of the solid electrolyte.

Research has been conducted on a sulfide solid electrolyte as a solid electrolyte for use in a solid-state battery. However, when a solid-state battery containing a sulfide solid electrolyte is charged and discharged, an interface resistance between an electrode active material and the sulfide solid electrolyte increases, and this results in restriction of transportation of lithium ions, which is problematic. This is probably because an electrode active material and a sulfide solid electrolyte react with each other to form a resistive layer at an interface therebetween. With regard to this problem, for example, attempts have been made in Patent Literatures 1 and 2 to suppress an increase in the interface resistance by coating the surface of a positive electrode active material with a specific compound.

WO2019035418 discloses a positive electrode active material for an all-solid-state lithium secondary battery, wherein the surface of a lithium-containing composite oxide (referred to as "present core particles") is coated with a compound (referred to as "LiAO compound") containing Li, A (A represents one or more elements selected from the group consisting of Ti, Zr, Ta, Nb, Zn, W, and Al), and O; and a halogen is present on the surface of the present core particles.

US2015270537 discloses a method of producing an active material powder including (i) an attachment step of obtaining a powder including an active material particle, which stores and releases lithium ions at a potential of 4.5 V or higher based on Li, and a coating layer precursor, which is attached to a surface of the active material particle, by attaching an alkoxide solution containing lithium ions and niobium ions to the surface of the active material particle and drying the attached alkoxide solution; and (ii) a heating step of forming a coating layer on the surface of the active material particle by heating the powder obtained in the attachment step to be within a temperature range of 120° C. to 200° C.

Citation List

Patent Literature

Patent Literature 1: US 2009081554A1
Patent Literature 2: US 2018219229A1
Patent Literature 3: WO2019035418A1
Patent Literature 4: US2015270537A1

Summary of Invention

There are expectations of fast-charging solid-state batteries. It is necessary for fast charging to accelerate a reaction for extracting lithium ions from a positive electrode active material and delivering the lithium ions to a solid electrolyte. However, current technology does not provide a satisfying reaction speed.

In view of the above-described problem, an object of the present invention is to provide an active material that allows for quick transfer of lithium ions between a positive electrode active material and a solid electrolyte.

To address the above-described problem, the present invention provides an active material for use in a solid-state battery, comprising a core particle and a coating layer on a surface of the core particle,

the core particle containing a lithium-metal complex oxide,
the lithium-metal complex oxide comprising:

a spinel-type complex oxide that contains Li, Mn, and O, and one or more elements other than Li, Mn, and O; or
a lithium-nickel metal complex oxide that contains Li, an element M (M includes one or more elements selected from the group consisting at least of Ni, Co, Mn, and Al), and O and that has a layered structure,

the coating layer comprising a compound containing Li, Nb and O, and Li being contained in the coating layer in excess of 1 mol per mole of Nb, and

the active material exhibiting at least one peak in a range of 0.145 to 0.185 nm and at least one peak in a range of 0.280 to 0.310 nm in a radial distribution function obtained through measurement of an X-ray absorption fine structure thereof,

wherein, in a particle size distribution, by volume, of the active material obtained through a particle size distribution measurement by laser diffraction scattering method, a ratio of an absolute value of a difference between a mode diameter of the active material and a $D_{10}$ of the active material (referred to as the "mode diameter" and the "$D_{10}$" respectively) to the mode diameter in percentage terms, $(|\text{mode diameter} - D_{10}| / \text{mode diameter}) \times 100$, satisfies $0\% < ((|\text{mode diameter} - D_{10}| / \text{mode diameter}) \times 100) \leq 58.0\%$, and wherein the active material has a crystallite size of 80 to 490 nm, and a ratio of the crystallite size to an average primary particle size determined from an image obtained using a scanning electron microscope, crystallite size / average primary particle size, is from 0.01 to 0.50.

Brief Description of Drawings

[Fig. 1] Fig. 1 shows radial distribution functions obtained through measurement of X-ray absorption fine structures of oxides containing lithium and niobium.

[Fig. 2] Fig. 2 is a graph for illustrating a process for determining whether or not there is a peak in a radial distribution function obtained through measurement of an X-ray absorption fine structure of a positive electrode active material obtained in Example 3.

[Fig. 3] Fig. 3 shows the radial distribution function obtained through measurement of the X-ray absorption fine structure of the positive electrode active material obtained in Example 3.

Description of Embodiments

Hereinafter, the present invention will be described by way of a preferred embodiment thereof. The present invention relates to an active material for use in a solid-state battery.

A. Active Material

1. XAFS

The active material of the present invention exhibits at least one peak in the range of 0.145 to 0.185 nm, and at least one peak in the range of 0.280 to 0.310 nm in a radial distribution function obtained through measurement of an X-ray absorption fine structure (hereinafter, alternatively referred to as an "XAFS") thereof.

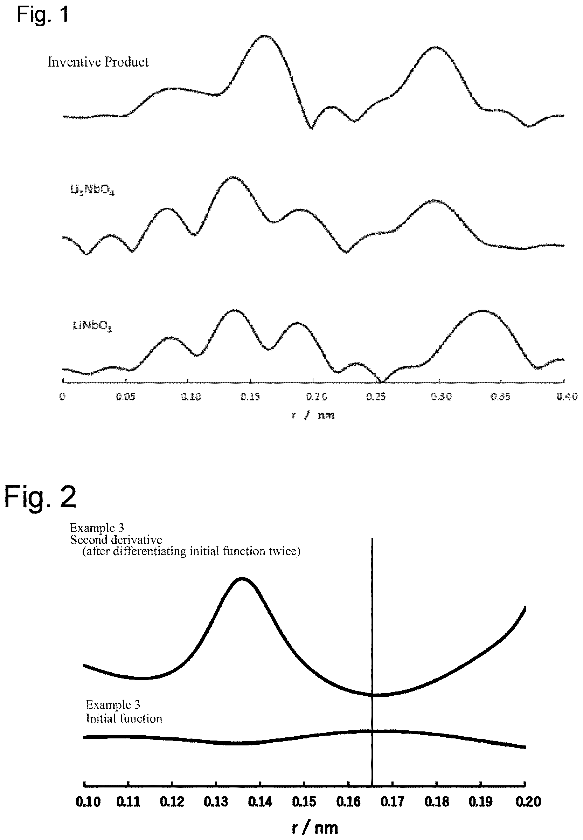

Specifically, as shown in Fig. 1, the active material of the present invention exhibits at least one peak in the range of 0.145 to 0.185 nm in a radial distribution function obtained through measurement of an XAFS thereof. The position of a peak is specified by the position of the top of the peak. The definition of the term "peak" will be described later.

The peak position in the present invention may be, for example, 0.148 nm or more, 0.151 nm or more, or 0.154 nm or more. The peak position may be, for example, 0.180 nm or less. The number of peaks observed in the range is at least one, and, for example, the number of peaks may be only one, or may be two or more. In addition, the active material of the present invention exhibits at least one peak in the range of 0.280 to 0.310 nm. The peak position in the present invention may be, for example, 0.285 nm or more. The peak position may be, for example, 0.308 nm or less.

The active material of the present invention has a core particle, and a coating layer on the surface of the core particle. In the present invention, the coating layer contains an oxide composed of elemental lithium (Li), an elemental metal A (except for elemental lithium (Li)), and elemental oxygen and having a specific chemical structure. Hereinafter, this oxide is referred to as a "LiAO compound" for the sake of convenience. The LiAO compound used in the present invention is characterized by exhibiting peaks at specific interatomic distances, in a radial distribution function obtained through measurement of an XAFS of the active material. According to the invention, the elemental metal A is elemental niobium (Nb) and Li is contained in the coating layer in excess of 1 mol per mole of Nb. The horizontal axis in the radial distribution function shown in Fig. 1 indicates an interatomic distance from the position of a niobium atom as a reference. The vertical axis indicates a probability of the existence of an atom positioned around niobium. A peak in the range of 0.145 to 0.185 nm corresponds to a distance between a niobium atom and an oxygen atom, and a peak in the range of 0.280 to 0.310 nm corresponds to a distance between niobium atoms. When a LiAO compound exhibiting peaks in the above-described predetermined ranges in a radial distribution function obtained through measurement of an XAFS is contained in the coating layer, the active material of the present invention can suppress an increase in an interface resistance with a solid electrolyte, and thus can improve the battery performance.

Exhibiting a peak in a radial distribution function means a state in which the radial distribution function may include an upward projecting portion or a shoulder portion. The state in which a second derivative obtained by differentiating twice a radial distribution function y = f(x), where the horizontal axis of the function is taken as x and the vertical axis thereof is taken as y, has a local minimum is defined as exhibiting a peak. In the present invention, it was determined whether or not there was a peak by differentiating a radial distribution function twice using Origin 9.1 (manufactured by Light Stone). For example, in Example 3 described later, a local minimum appears by differentiating twice the radial distribution function regarding a peak in the range of 0.145 to 0.185 nm, as shown in Fig. 2. Accordingly, it can be said that, in Example 3, a peak is exhibited in the range of 0.145 to 0.185 nm.

As described above, a LiAO compound favorably used in the present invention exhibits peaks each at a predetermined position at a specific interatomic distance, in a radial distribution function obtained through measurement of an XAFS thereof. In contrast, conventionally known Li-A-O-based compounds do not exhibit peaks at the predetermined positions prescribed in the present invention, in a radial distribution function obtained from an XAFS thereof. For example, $LiNbO_3$, which is a type of conventionally known Li-A-O compounds, does not exhibit any peak in the range of 0.145 to 0.185 nm or the range of 0.280 to 0.310 nm, as shown in Fig. 1. Furthermore, $Li_3NbO_4$, which is another type of conventionally known Li-A-O compounds, exhibits a peak in the range of 0.280 to 0.310 nm, but does not exhibit any peak in the range of 0.145 to 0.185 nm. Thus, the LiAO compound favorably used in the present invention has a new structure that has not been known to date.

The XAFS technique involves analyzing an absorption spectrum obtained by irradiating a substance with X-rays. In an absorption spectrum obtained by irradiating a substance with X-rays, a sharp rise unique to an element contained in a substance, that is, an absorption edge is observed. A fine structure that appears in a range of approximately $\pm 50$ eV from the absorption edge is referred to as an XANES (X-ray Absorption Near Edge Structure). Also, a vibrational structure that appears in a range from the absorption edge to approximately 1000 eV on the higher energy side is referred to as an EXAFS (Extended X-ray Absorption Fine Structure). The region obtained by combining the XANES and the EXAFS is referred to as an XAFS. With the XAFS, a local structure (an interatomic distance and the number of coordinations) around an element of interest in a sample, and its chemical state (a valence and a coordination geometry) can be evaluated. Furthermore, the XAFS technique is a nondestructive measurement method and provides information on the outermost surface of a substance. Thus the active material of the present invention itself can be used as a measurement sample, and information on the coating layer of the active material can be obtained.

In the present invention, the process for measuring the XAFS of the active material is performed according to the following procedure, for example.

Sample Preparation

A sample is pulverized in an agate mortar and is mixed with a boron nitride powder, and the mixture is shaped into a tablet with a diameter of 10 mm and a thickness of about 1 mm. The amounts of sample and boron nitride are set as appropriate to optimal amounts according to the concentration of the element A contained in the sample to be measured, and the X-ray absorption coefficients of the LiAO compound and the compound of the core particle.

The conditions for measuring the XAFS at an Nb-K edge are as follows.

- Laboratory: SPring-8
- Experimental Station: BL14b2
- Spectroscope: Monochromator Si (311)
- Higher-order light removal: Rh coated mirror 2.4 mrad $\times$ 2 pcs
- Size of incident X-ray: vertical 1 mm $\times$ horizontal 5 mm (size of slit in front of sample)
- Measurement method: transmission method
- Detector: ionization chamber
- Absorption edge measured: Nb-K absorption edge (18986 eV)

For each incident X-ray energy (E, x axis), I0 and It are measured, and an X-ray absorption (y axis) is determined using the following formula and plotted on the x-y axes, so that an XAFS spectrum is obtained.

$$\text{X-ray absorption } \mu t = -\text{In}(It/I0)$$

In order to acquire a radial distribution function based on the data obtained in this manner and determine an interatomic distance, the processing is performed according to the following procedure.

A radial distribution function obtained by Fourier-transforming an EXAFS spectrum will be described.

"Athena" (Demeter ver. 0.9.25) is used as analysis software.

First, an XAFS spectrum is read using the software, and a Pre-edge region (region from approximately -150 to -45 eV apart from the absorption edge) and a Post-edge region (region from approximately 150 to 1300 eV apart from the absorption edge), which are background absorption regions, are fitted, so that the XAFS spectrum is normalized. Next, in order to extract an EXAFS spectrum ($\chi$(k)), a spline curve fitting is performed. The parameters used in the spline curve fitting in the analysis using the software are as follows.

- Rbkg = 1
- Spline range in k: from 1 to 15
- Spline clamps low: None, high: None
- k-weight = 3
- Plotting k-weights: 3

Lastly, the EXAFS spectrum ($\chi$(k)) is Fourier-transformed to obtain a spectrum indicating the radial distribution function. The parameters in Fourier transform using the software are as follows.

- k-range: from 3.5 to 11.5
- dk: 1
- Window: Hanning
- Arbitrary k-weight: 1
- Phase correction: not performed

2. LiAO Compound

As described above, the active material of the present invention has a core particle and a coating layer on the surface of the core particle. The coating layer is made of a compound containing Li, an element A (A is at least Nb), and O, or in other words, the above-described LiAO compound. Due to the coating of the LiAO compound on the surface of the core particle, the lithium ion conductivity can be improved to reduce the interface resistance between a positive electrode active material and a solid electrolyte, and the rate characteristics can be improved.

A state in which "the surface of the core particle is coated with the LiAO compound" encompasses a state in which the LiAO compound is present in the form of particles on the surface of the core particle, a state in which the LiAO compound is present in the form of aggregate particles that are formed through aggregation of particles on the surface of the core particle, and a state in which the LiAO compound is present in the form of a layer on the surface of the core particle. The wording "is present in the form of a layer" means a state in which the LiAO compound is present with a certain thickness.

In the case where the LiAO compound forms a layer, the thickness thereof is preferably from 0.5 to 200 nm, more preferably 0.7 nm or greater or 100 nm or less, even more preferably 1 nm or greater or 90 nm or less, yet even more preferably 80 nm or less, yet even more preferably 70 nm or less, yet even more preferably 60 nm or less, yet even more preferably 50 nm or less, and yet even more preferably 40 nm or less. With a thickness within the above-described range, the layer can function as a favorable lithium ion-conducting layer that has a low interface resistance. The thickness of the layer can be measured, for example, using a scanning transmission electron microscope (STEM), and energy dispersive X-ray spectroscopy (EDS) may be used in combination with the STEM, when necessary.

The LiAO compound may be absent in a portion or portions of the surface of the core particle. In particular, the LiAO compound preferably coats 30% or greater, more preferably 40% or greater, and even more preferably 50% or greater, of the area of the entire surface of the core particle. Whether the LiAO compound coats the surface of the core particle can be checked by, for example, observing the surface of the core particle using a scanning transmission electron microscope (STEM), in combination with energy dispersive X-ray spectroscopy (EDS) when necessary, as described above, or by using Auger electron spectroscopy.

The coating of the LiAO compound on the surface of the core particle does not need to have a uniform thickness.

Preferably, the LiAO compound is amorphous. When the LiAO compound is amorphous, the LiAO compound serves as a buffer layer between the active material and the solid electrolyte to thereby reduce the interface resistance even further. Whether the compound coating the surface of the core particle is crystalline or amorphous can be determined by checking whether selected-area electron diffraction gives a halo pattern. A halo pattern is a low-angle, broad diffraction pattern without a clear diffraction peak.

The composition of the elements contained in the LiAO compound can be represented by, for example, $Li_xAO_y$ when the element A is at least Nb. A A composition in which Li is contained in excess of 1 mol per mole of the element A (x > 1) is used. Such a composition of the elements can suppress the formation of a compound of A and O to reduce the interface resistance effectively.

For the LiAO compound represented by $Li_xAO_y$, the amount of lithium material used, relative to the amount of element A material used, is adjusted so as to be greater than the amount in the stoichiometric compositional ratio of the composition expected to be produced, for example, $LiAO_3$, whereby satisfy x > 1 is satisfied. In this case, simply adding Li in an excess amount causes lithium carbonate to be produced on the surface of the active material due to the excess Li, and the lithium carbonate serves as a resistance and thus tends to rather impair the rate characteristics and the cycle characteristics. For this reason, it is preferable to adjust the amounts of element A material and lithium material so as to form $Li_xAO_y$ having a predetermined composition, while taking into consideration the formation of lithium carbonate, which is an undesirable compound.

### 3. Core particle

The core particle contains a lithium-metal complex oxide. The lithium-metal complex oxide may be a known lithium-metal complex oxide, and examples thereof include a lithium-containing complex oxide having a layered rock salt-type structure and represented by the general formula $LiMO_2$, where M is an elemental metal, a lithium-containing complex oxide having a spinel-type structure and represented by the general formula $LiM_2O_4$, and a lithium-containing complex oxide having an olivine structure and represented by the general formula $LiMPO_4$, where M is an elemental metal, or $LiMSiO_4$, where M is an elemental metal. These lithium-metal complex oxides may be used singly, or in combination of two or more thereof. However, the lithium-metal complex oxide is not limited to these oxides.
The core particle according to the invention contains a lithium-metal complex oxide,
the lithium-metal complex oxide comprising:

(Core particle A) a spinel-type complex oxide that contains Li, Mn, and O, and one or more elements other than Li, Mn, and O; or
(Core particle B) a lithium-nickel metal complex oxide that contains Li, an element M (M includes one or more elements selected from the group consisting at least of Ni, Co, Mn, and Al), and O and that has a layered structure.

### 3-1. Core particle A

The core particle A is a particle made of a spinel-type complex oxide that contains Li, Mn, and O, and also one or more, or preferably two or more, elements other than these elements (hereinafter, such a core particle will also be referred to as "core particle A"). In the case where the active material of the present invention containing the core particle A is used as a positive electrode active material, the positive electrode active material has a working potential of 4.5 V or greater relative to the potential of metal Li as a reference potential. The wording "having a working potential of 4.5 V or greater relative to the potential of metal Li as a reference potential" does not necessarily mean "having only a working potential of 4.5 V or greater as a plateau region", but also encompasses "partially having a working potential of 4.5 V or greater". Accordingly, the active material of the present invention is not limited to positive electrode active materials consisting of one or more 5V-class positive electrode active materials, which have a working potential of 4.5 V or greater as a plateau region. For example, the active material of the present invention may also contain a positive electrode active material that has a working potential of less than 4.5 V as a plateau region. Specifically, the active material of the present invention may be a positive electrode active material in which the aforementioned 5V-class positive electrode active material preferably accounts for 30 mass% or greater, more preferably 50 mass% or greater, and even more preferably 80 mass% or greater (including 100 mass%).
As described above, it is preferable that the core particle A be particles made of a spinel-type complex oxide that contains Li, Mn, and O, and also two or more elements other than these elements. At least one element of the "two or more elements other than these elements" is preferably an elemental metal M1 selected from the group consisting of Ni, Co, and Fe, and the other element is preferably an elemental metal M2 selected from the group consisting of Na, Mg, Al, P, K, Ca, Ti, V, Cr, Fe, Co, Cu, Ga, Y, Zr, Nb, Mo, In, Ta, W, Re, and Ce and combination of two or more thereof.
A preferred example of the composition of the core particle A is a composition that contains a spinel-type lithium manganese-containing complex oxide having a crystal structure in which some of the Mn sites in $LiMn_2O_{4-\delta}$ are replaced by Li, the elemental metal M1, and the other elemental metal M2.
The elemental metal M1 is a substituent element that mainly contributes to realization of a working potential of 4.5 V relative or greater to the potential of metal Li as the reference potential, and examples thereof include Ni, Co, and Fe. The elemental metal M1 contains at least one of these elements, and preferably contains at least one of Ni and Co.
The elemental metal M2 is a substituent element that mainly contributes to stabilization of the crystal structure and therefore improvement in the characteristics. Examples of the elemental metal M2 serving as, for example, a substituent element that contributes to improvement in the capacity retention rate include Na, Mg, Al, P, K, Ca, Ti, V, Cr, Fe, Co, Cu, Ga, Y, Zr, Nb, Mo, In, Ta, W, Re, and Ce, and among these elements, Na, Mg, Al, P, K, Ca, Ti, Cr, Fe, Co, Cu, Ga, Y, Zr, Nb, Mo, Ta, and W are preferable. The elemental metal M2 may be one of the above-described elements, or may be a combination of two or more thereof. The elemental metal M2 preferably contains at least one of the above-described elements, and may also contain an elemental metal other than the above-described elements. The elemental metal M2 contained in the structure is a different elemental species than the elemental metal M1.

An exemplary composition of the core particle A includes a spinel-type lithium manganese-containing complex oxide represented by the formula (1): $Li_x(M1_yM2_zMn_{2-x-y-z})O_{4-\delta}$. The elemental metal M1 and the elemental metal M2 in the formula (1) are as described above.

In the formula (1) above, "x" is preferably from 1.00 to 1.20, more preferably 1.01 or greater or 1.10 or less, and even more preferably 1.02 or greater or 1.08 or less. "y" indicates the amount of the elemental metal M1 contained and is preferably from 0.20 to 1.20, more preferably 0.30 or greater or 1.10 or less, and even more preferably 0.35 or greater or 1.05 or less. "z" indicates the amount of the elemental metal M2 contained and is preferably from 0.001 to 0.400, more preferably 0.002 or greater or 0.400 or less, even more preferably 0.005 or greater or 0.30 or less, and yet even more preferably 0.10 or greater. In particular, when z is 0.10 or greater, the cycle characteristics can be more effectively improved.

Another example of the composition of the core particle A is a spinel-type lithium manganese-containing complex oxide represented by the formula (2): $[Li_x(Ni_yM3_zMn_{3-x-y-z})O_{4-\delta}]$. In the formula (2), "x" is preferably from 1.00 to 1.20, more preferably 1.01 or greater or 1.10 or less, and even more preferably 1.02 or greater or 1.08 or less. In the formula (2), "y" is preferably from 0.20 to 0.70, more preferably 0.30 or greater or 0.60 or less, and even more preferably 0.35 or greater or 0.55 or less.

In the formula (2) above, examples of the elemental metal M3 include Na, Mg, Al, P, K, Ca, Ti, V, Cr, Fe, Co, Cu, Ga, Y, Zr, Nb, Mo, In, Ta, W, Re, and Ce, and among these elements, Na, Mg, Al, P, K, Ca, Ti, Cr, Fe, Co, Cu, Ga, Y, Zr, Nb, Mo, Ta, and W are preferable. The elemental metal M3 may be one of the above-described elements, or may be a combination of two or more thereof. "z" indicates the molar ratio of the elemental metal M3 and is preferably greater than 0 and 0.5 or less, more preferably greater than 0.01 or 0.45 or less, even more preferably 0.05 or greater or 0.40 or less, and yet even more preferably 0.10 or greater or 0.35 or less. In particular, when z is 0.10 or greater, the cycle characteristics can be more effectively improved.

"$4-\delta$" in the above formulae (1) and (2) indicates that an oxygen vacancy may be included. Some of oxygen sites may be replaced by fluorine or another element. In this case, $\delta$ is preferably 0 or greater or 0.2 or less, more preferably 0.1 or less, and even more preferably 0.05 or less.

The core particle A may also contain other components, in addition to Li, Mn, the elemental metal M1, the elemental metal M2, the elemental metal M3, and O, which have been described above. In particular, the core particle A may contain other elements as long as the amount of each of the other elements does not exceed 0.5 wt%. It is considered that such an amount of the other element has little influence on the performance of the core particle.

The core particle A may contain B (boron). With regard to the state of B, the core particle A may contain a complex oxide phase containing Ni, Mn, and B, in addition to the spinel crystal phase. An example of the complex oxide phase containing Ni, Mn, and B is a crystal phase of $Ni_5MnO_4(BO_3)_2$. Whether the core particle A contains the crystal phase of $Ni_5MnO_4(BO_3)_2$ can be checked by comparing a diffraction pattern obtained through X-ray diffraction (XRD) with PDF (Powder Diffraction File) No. "01-079-1029". It is considered that the complex oxide that contains Ni, Mn, and B is probably present on the surface of the core particle A and at a grain boundary thereof.

With regard to the amount of the above-described complex oxide phase containing Ni, Mn, and B, the core particle A preferably contains the complex oxide phase such that the content of the element B in the core particle A is from 0.02 to 0.80 mass%, more preferably 0.05 mass% or greater or 0.60 mass% or less, even more preferably 0.30 mass% or less, and yet even more preferably 0.25 mass% or less. When the content of the element B is 0.02 mass% or more, the discharge capacity at a high temperature (e.g., 45°C) can be maintained, and when the content of the element B is 0.80 mass% or less, the rate characteristics can be maintained.

Whether the core particle A has a spinel-type structure can be checked by the following manner, for example: fitting to a crystal structure model of a cubic crystal with the space group Fd-3m (Origin Choice 2) is performed, and when Rwp < 10 or S < 2.5 is satisfied, it is determined that the core particle A has a spinel-type structure, wherein Rwp and S indicate the degree of agreement between the found intensity and the calculated intensity.

Primary particles of the core particle A are preferably polycrystalline rather than monocrystalline. The term "monocrystalline" means particles in which each primary particle is a single crystallite, and the term "polycrystalline" means particles in which a plurality of crystallites are present in each primary particle. Whether or not the core particle is polycrystalline can be checked by observing cross sections of the primary particles using electron backscatter diffraction (EBSD). If they are polycrystalline, the presence of crystallites having multiple orientations can be confirmed in each primary particle.

3-2. Core particle B

The core particle B is a particle made of a lithium-nickel metal complex oxide containing Li, an element M (M includes one or more elements selected from the group consisting at least of Ni, Co, Mn, and Al), and O and having a layered structure (hereinafter, such a core particle will also be referred to as "core particle B"). The active material of the present invention may also contain another component in addition to the core particle B. The core particle B preferably accounts for 80 mass% or greater, more preferably 90 mass% or greater, and even more preferably 95 mass% or greater (including 100 mass%), of the active material of the present invention, in view of effectively exhibiting the properties of the core particle B.

The core particle B is preferably a particle of a lithium-metal complex oxide having a layered structure and represented by the general formula (3): $Li_{1+x}M_{1-x}O_2$, where M is one or more elements selected from the group consisting of Ni, Co, Mn, and Al, or M includes one or more elements selected from the group consisting of Ni, Co, Mn, and Al and also includes one or more elements selected from the group consisting of elemental transition metals that are included in the group 3 to group 11 on the periodic table and elemental typical metals in periods 1 to 3 on the periodic table (these elements will be referred to as "constituent element M").

In the general formula (3): $Li_{1+x}M_{1-x}O_2$, "1+x" is preferably from 0.95 to 1.09, more preferably 0.97 or greater or 1.07 or less, and even more preferably from 0.98 to 1.05.

"M" in the formula (3) may contain three elements, Mn, Co, and Ni. For example, M may consist of the three elements, Mn, Co, and Ni, may contain one or more other elements in addition to the three elements, or may be any other combination.

Examples of the elemental transition metal that are included in the group 3 to the group 11 on the periodic table and the elemental typical metal in periods 1 to 3 on the periodic table include Al, P, V, Fe, Ti, Mg, Cr, Ga, In, Cu, Zn, Nb, Zr, Mo, W, Ta, and Re, and among others, P, V, Fe, Ti, Mg, Cr, Ga, Cu, Zn, Nb, Zr, Mo, W, and Ta are preferable.

In the case where "M" in the formula (3) includes the three elements, Mn, Co, and Ni, the molar ratio between the Mn, Co, and Ni is preferably such that Mn : Co : Ni = 0.00 to 0.45 : 0.00 to 0.40 : 0.30 to 1.00, more preferably Mn : Co : Ni = 0.01 to 0.45 : 0.01 to 0.40 : 0.30 to 0.95, even more preferably Mn : Co : Ni = 0.05 to 0.40 : 0.03 to 0.40 : 0.30 to 0.85, and yet even more preferably Mn : Co : Ni = 0.05 to 0.40 : 0.03 to 0.40 : 0.30 to 0.75.

In the formula (3), the atomic ratio of the oxygen content is specified as "2" for the sake of convenience; however, non-stoichiometry is allowed to some extent. That is to say, the atomic ratio of the oxygen content may be "$2-\delta$", where "$-\delta$" indicates oxygen vacancy, and $\delta$ is preferably 0 or greater or 0.2 or less, more preferably 0.1 or less, and even more preferably 0.05 or less.

The core particle B may contain inevitable impurities. For example, the core particle B may contain inevitable impurity elements as long as the amount of each element does not exceed 0.17 mass%. It is considered that such an amount is has little influence on the properties of the core particle B.

Whether the core particle B has a layered structure can be checked by the following manner, for example: fitting to a crystal structure model of a hexagonal crystal with the space group R-3m is performed, and when Rwp < 10 or S < 2.5 is satisfied, it is determined that the core particle B has a layered structure, wherein Rwp and S indicate the degree of agreement between the found intensity and the calculated intensity.

As is the case with the core particle A, primary particles of the core particle B are preferably polycrystalline rather than monocrystalline. The terms "polycrystalline" and "monocrystalline" are as defined in the description for the core particle A.

4. Active Material

Preferably, the active material of the present invention have the following characteristics.

(Crystallinity)

Primary particles of the active material of the present invention are preferably polycrystalline rather than monocrystalline. More specifically, it is preferable that an amorphous compound be present on the surface of a polycrystalline core particle. The term "monocrystalline" means particles in which each primary particle is a single crystallite, and the term "polycrystalline" means particles in which a plurality of crystallites are present in each primary particle.

Whether or not the primary particles of the active material are not monocrystalline, that is, whether or not the primary particles are polycrystalline can also be determined by checking whether the ratio of the crystallite size to the average primary particle size (crystallite size / average primary particle size) is close to 0, or specifically within a range of greater than 0 and less than 1. The ratio close to 0 means that many crystallites are contained in primary particles. However, the method for determining is not limited to this method.

As used herein, the term "primary particle" means the smallest unit particle surrounded by grain boundaries when observed under an SEM (scanning electron microscope; e.g., at 500x to 5000x magnification). The average primary particle size can be obtained by performing observation under an SEM (scanning electron microscope; e.g., at 500x to 5000x magnification), arbitrarily selecting thirty primary particles, calculating the particle sizes of the selected primary particles by means of image analysis software, and averaging the thirty primary particle sizes. On the other hand, as used herein, the term "secondary particle" means a particle that is formed by a plurality of primary particles aggregating so as to share portions of their outer peripheries (grain boundaries) and that is isolated from other particles. $D_{50}$ in a particle size distribution by volume obtained through particle size distribution measurement by a laser diffraction scattering method has a meaning of an alternative value for the mean diameter of particles including the primary particles and the secondary particles. The term "crystallite" means a primary particle that can be considered to be a single crystal, and can be obtained through XRD analysis and Rietveld analysis.

(Mode Diameter)

The mode diameter of the active material of the present invention, or more specifically, the mode diameter thereof in the particle size distribution, by volume, obtained through particle size distribution measurement by a laser diffraction scattering method is preferably 0.40 to 11.0 $\mu$m, more preferably greater than 1.00 $\mu$m or less than 11.0 $\mu$m, even more preferably greater than 1.00 $\mu$m or less than 10.0 $\mu$m, yet even more preferably greater than 1.50 $\mu$m or less than 10.0 $\mu$m, and yet even more preferably greater than 2.00 $\mu$m or less than 9.0 $\mu$m. When the mode diameter is within the above-described range, resistance when Li diffuses into the secondary particles can be reduced, and consequently, the end-of-discharge characteristics can be improved.

($D_{50}$)

$D_{50}$ of the active material of the present invention, or more specifically, $D_{50}$ thereof in the particle size distribution, by volume, obtained through particle size distribution measurement by laser diffraction scattering method is preferably 0.5 $\mu$m or greater, preferably 1.0 $\mu$m or greater, preferably 2.0 $\mu$m or greater, or preferably 2.5 $\mu$m or greater. The $D_{50}$ is preferably 15.0 $\mu$m or less, more preferably 10.0 $\mu$m or less, and even more preferably 8.0 $\mu$m or less. When the $D_{50}$ is within the above-described range, resistance when Li diffuses into the secondary particles can be reduced, and consequently, the end-of-discharge characteristics can be improved.

(|Mode Diameter - $D_{50}$| / Mode Diameter)

The ratio of the absolute value of the difference between the mode diameter and the $D_{50}$ of the active material of the present invention to the mode diameter thereof in percentage terms, (|mode diameter - $D_{50}$| / mode diameter) $\times$ 100, preferably satisfies 0% $\leq$ ((|mode diameter - $D_{50}$| / mode diameter) $\times$ 100) $\leq$ 25%. The ratio more preferably satisfies ((|mode diameter - $D_{50}$| / mode diameter) $\times$ 100) $\leq$ 20%, even more preferably ((|mode diameter - $D_{50}$| / mode diameter) $\times$ 100) $\leq$ 17%, yet even more preferably ((|mode diameter - $D_{50}$| / mode diameter) $\times$ 100) $\leq$ 16%, and yet even more preferably ((|mode diameter - $D_{50}$| / mode diameter) $\times$ 100) $\leq$ 15%. The ratio more preferably satisfies 0% < ((|mode diameter - $D_{50}$| / mode diameter) $\times$ 100), even more preferably 1% $\leq$ ((|mode diameter - $D_{50}$| / mode diameter) $\times$ 100), yet even more preferably 2% $\leq$ ((|mode diameter - $D_{50}$| / mode diameter) $\times$ 100), and yet even more preferably 2.5% $\leq$ ((|mode diameter - $D_{50}$| / mode diameter) $\times$ 100). The value of (mode diameter - $D_{50}$| / mode diameter) $\times$ 100 within the above-described range means that the particle size distribution is a unimodal distribution, or in other words, a distribution that does not have a plurality of peaks, and furthermore that the particle size distribution is a normal distribution or an approximately normal distribution.

($D_{10}$)

$D_{10}$ of the active material of the present invention, or more specifically, $D_{10}$ thereof in the particle size distribution, by volume, obtained through particle size distribution measurement by laser diffraction scattering method is preferably from 0.2 to 8.0 $\mu$m. The $D_{10}$ of the active material is more preferably 1.0 $\mu$m or greater, and even more preferably 2.0 $\mu$m or greater. The $D_{10}$ of the active material is more preferably 6.0 $\mu$m or less, and even more preferably 5.0 $\mu$m or less. When the $D_{10}$ is within the above-described range, a side reaction can be suppressed.

(|Mode Diameter - $D_{10}$| / Mode Diameter)

The ratio of the absolute value of the difference between the mode diameter and the $D_{10}$ of the active material of the present invention to the mode diameter thereof in percentage terms, (|mode diameter - $D_{10}$| / mode diameter) $\times$ 100, preferably satisfies 0% < ((|mode diameter - $D_{10}$| / mode diameter) $\times$ 100) $\leq$ 58.0%. The ratio more preferably satisfies ((|mode diameter - $D_{10}$| / mode diameter) $\times$ 100) $\leq$ 55.0%, even more preferably ((|mode diameter - $D_{10}$| / mode diameter) $\times$ 100) $\leq$ 45.0%, and yet even more preferably ((|mode diameter - $D_{10}$| / mode diameter) $\times$ 100) $\leq$ 40.0%. The ratio more preferably satisfies 1% $\leq$ ((|mode diameter - $D_{10}$| / mode diameter) $\times$ 100), even more preferably 2% $\leq$ ((|mode diameter -

$D_{10}$| / mode diameter) $\times$ 100), and yet even more preferably 2.5% $\leq$ ((|mode diameter - $D_{50}$| / mode diameter) $\times$ 100). The value of ((|mode diameter - $D_{10}$| / mode diameter) $\times$ 100) within the above-described range means that the active material has a distribution in which the width between the mode diameter and the $D_{10}$ thereof is narrow.

Moreover, when the ratio of the absolute value of the difference between the mode diameter and the $D_{50}$ to the mode diameter in percentage terms, (|mode diameter - $D_{50}$| / mode diameter) $\times$ 100, is within the above-described range, or when the ratio of the absolute value of the difference between the mode diameter and the $D_{10}$ to the mode diameter in percentage terms, (|mode diameter - $D_{10}$| / mode diameter) $\times$ 100, is within the above-described range, the active material has a sharp particle size distribution that is close to a normal distribution; in other words, the sizes of the primary particles and the secondary particles can be uniform. This means that the proportion of a fine powder region in the entire particle size distribution can be reduced. Since fine powders have an adverse effect on the cycle characteristics, the cycle characteristics can be improved by reducing the proportion of fine powders.

Furthermore, according to the present invention, the advantageous effect of improving the charge characteristics is exhibited since the particles of the active material having a sharp particle size distribution have the coating layer containing the above-described LiAO compound. In particular, in a method for producing the active material described later, the phenomenon of adsorption to the core particle is utilized for introducing the coating layer containing the LiAO compound. Therefore, when a core particle is used that are uniform in particle size and hence has a sharp particle size distribution, the coating rates and the coating thicknesses of the individual particles are successfully equalized, and particles of the active material that have a sharp particle size distribution, with the coated state of the particles being uniform among the particles, can be thus obtained. As a result, transportation of lithium ions during charging is equalized among the particles, and the charge characteristics are thus improved.

($D_{min}$)

$D_{min}$ of the active material of the present invention, or more specifically, $D_{min}$ thereof in the particle size distribution, by volume, obtained through particle size distribution measurement by laser diffraction scattering method is preferably 0.1 $\mu$m or greater, more preferably greater than 0.15 $\mu$m, even more preferably greater than 2.0 $\mu$m, and yet even more preferably greater than 0.6 $\mu$m. The $D_{min}$ is preferably 6.0 $\mu$m or less, more preferably less than 5.0 $\mu$m, even more preferably less than 4.0 $\mu$m, yet even more preferably less than 3.0 $\mu$m, yet even more preferably less than 2.0 $\mu$m, and yet even more preferably less than 1.8 $\mu$m. When the $D_{min}$ is within the above-described range, a side reaction can be suppressed, and the cycle characteristics can be improved.

The particle size distribution of the secondary particles of the active material of the present invention can be adjusted as described above by, for example, firing and pulverizing the particles and performing a heat treatment on the pulverized particles. However, the adjustment method is not limited to this method.

(Average Primary Particle Size)

The average primary particle size of the active material of the present invention, or more specifically, the average primary particle size thereof calculated from an SEM image is preferably 0.10 $\mu$m or greater, more preferably greater than 0.25 $\mu$m, even more preferably greater than 0.40 $\mu$m, and yet even more preferably greater than 0.50 $\mu$m. The average primary particle size is preferably 5.00 $\mu$m or less, more preferably 4.00 $\mu$m or less, and even more preferably 3.00 $\mu$m or less. When the average primary particle size is within the above-described range, the rate characteristics can be improved.

(Average Primary Particle Size / $D_{50}$)

The ratio of the average primary particle size to the $D_{50}$, average primary particle size / $D_{50}$, of the active material of the present invention is preferably from 0.01 to 0.99. The ratio is more preferably 0.1 or greater, even more preferably 0.2 or greater, yet even more preferably 0.3 or greater, and yet even more preferably 0.4 or greater. The ratio is more preferably 0.9 or less, even more preferably 0.85 or less, and yet even more preferably 0.7 or less. When the ratio, average primary particle size / $D_{50}$, is within the above-described range, the dispersibility of the primary particles can be improved. Therefore, compared with a case in which the secondary particles account for half or more of the particle size distribution, each of the primary particles can be sufficiently in contact with the solid electrolyte. Accordingly, the reaction area between Li and the particles increases, and the resistance at the interface between the primary particles within the secondary particles can be reduced, which leads to an improvement in the end-of-discharge characteristics.

For adjusting the average primary particle size of the active material of the present invention as described above, it is preferable to adjust the firing temperature, or fire after adding a substance, such as a boron compound or a fluorine compound, that enhances the reactivity during firing, in the production of the active material. However, the adjustment method is not limited to these methods.

(Crystallite Size)

The crystallite size of the active material of the present invention is from 80 to 490 nm. The crystallite size is more preferably 100 nm or greater, even more preferably 110 nm or greater, yet even more preferably 120 nm or greater, and yet even more preferably 130 nm or greater. The crystallite size is more preferably 350 nm or less, and even more preferably 240 nm or less. When the crystallite size is within the above-described range, the ionic conductivity in the crystallites can be improved, and the resistance can thus be reduced. In addition, due to the reduction in the resistance, polarization during a cycle can be reduced, and the discharge capacity can be prevented from gradually decreasing with repetition of charging and discharging at a high temperature.

(Crystallite Size / Average Primary Particle Size)

The ratio of the average primary particle size to the crystallite size, crystallite size / average primary particle size, of the active material of the present invention is from 0.01 to 0.50. The ratio is more preferably 0.02 or greater, even more preferably 0.03 or greater, yet even more preferably 0.04 or greater, and yet even more preferably 0.05 or greater. The ratio is more preferably 0.41 or less, even more preferably 0.32 or less, and yet even more preferably 0.26 or less. The active material of the present invention is preferably polycrystalline, as described above, and therefore, the crystallite size / the average primary particle size is less than 1. Furthermore, when the crystallite size / the average primary particle size is within the above-described range, the primary particles have good dispersibility in a powder. Thus, the contact area between the solid electrolyte and the primary particles increases, and the resistance at the interface between the primary particles within the secondary particles can be reduced, which can lead to an improvement in the end-of-discharge characteristics. For adjusting the crystallite size so as to fall within the above-described range, it is preferable to adjust the firing temperature, the firing time, an auxiliary agent that enhances the reactivity, the firing atmosphere, the types of materials, and others. However, the adjustment method is not limited to these methods.

(Strain)

In an X-ray diffraction pattern of the active material of the present invention obtained through analysis using an X-ray diffractometer (XRD), the numerical value of the strain obtained through Rietveld analysis is preferably from 0.00 to 0.35. When the strain is as small as a value within this range, the lithium-nickel metal complex oxide has a sufficiently sturdy skeleton, and therefore, when the active material of the present invention is used as an active material in a lithium secondary battery, the end-of-discharge characteristics and the cycle characteristics can be improved even more. From this viewpoint, the strain of the active material of the present invention is more preferably less than 0.35, even more preferably less than 0.32, yet even more preferably less than 0.30, yet even more preferably less than 0.28, yet even more preferably less than 0.25, yet even more preferably less than 0.20, and yet even more preferably less than 0.15. For adjusting the strain of the active material of the present invention to a numerical value within the above-described range, a heat treatment can be performed under preferred conditions. However, the adjustment method is not limited to this method.

(Specific Surface Area)

The specific surface area of the active material of the present invention is preferably from 0.1 to 12.0 $m^2/g$, more preferably greater than 0.2 $m^2/g$ or less than 10.0 $m^2/g$, even more preferably less than 8.0 $m^2/g$, yet even more preferably less than 7.0 $m^2/g$, and yet even more preferably less than 5.0 $m^2/g$, in view of suppressing a side reaction. In some cases, the specific surface area of the active material of the present invention is preferably 0.4 $m^2/g$ or greater or 12.0 $m^2/g$ or less, more preferably 0.5 $m^2/g$ or greater or 10.0 $m^2/g$ or less, even more preferably 8.0 $m^2/g$ or less, and yet even more preferably 5.0 $m^2/g$ or less.

The specific surface area is measured in the following manner. First, 2.0 g of a sample is weighed into a glass cell (standard cell) for a fully automatic specific surface area analyzer, Macsorb (manufactured by Mountech Co., Ltd.), and the glass cell is attached to an autosampler. The inside of the glass cell is purged with a nitrogen gas, and then a heat treatment is performed at 200°C for 15 minutes in the nitrogen gas atmosphere, followed by cooling for 4 minutes while flowing a nitrogen-helium mixed gas. After the cooling, the specific surface area of the sample (powder) is measured using a BET single-point method. A mixed gas containing 30 vol% nitrogen and 70 vol% helium is used during the cooling and also as an adsorption gas in the measurement.

(Surface Composition)

In the case where the active material of the present invention has a coating of an amorphous compound on the surface of the core particle, both an improvement in the lithium ion conductivity and a reduction in the resistance can be achieved by controlling the ratio between Li and the element A on the surface of the active material, thereby improving the end-of-discharge characteristics and also effectively improving the rate characteristics and the cycle characteristics. More specifically, the molar ratio of the Li content to the element A content, Li/A, on the surface of the active material (particles) obtained by X-ray photoelectron spectroscopy (XPS) is preferably from 0.5 to 33.3, more preferably greater than 0.7 or less than 30.0, even more preferably greater than 1.0 or less than 20.0, yet even more preferably greater than 1.1 or less than 15.0, and yet even more preferably greater than 1.2 or less than 10.0. In some cases, the molar ratio Li/A is preferably from 0.5 to 3.5, more preferably greater than 0.7 or 3.4 or less, even more preferably greater than 1.0 or less than 3.0, yet even more preferably greater than 1.1 or less than 2.5, and yet even more preferably greater than 1.2 or less than 2.1. The molar ratio Li/A is a value including Li derived from lithium carbonate.

For adjusting the ratio between Li and the element A on the surface of the active material of the present invention to a value within the above-described range, it is preferable that while Li derived from lithium carbonate to be formed on the surface of the active material is taken into consideration as described above, the amounts of the element A material and the lithium material to be used be adjusted so that the molar ratio Li/A is within the above-described range.

(Amount of Carbonate Ions : Amount of $CO_3^{2-}$)

If a large amount of carbonates (lithium carbonate, sodium carbonate, etc.) is present on the surface of the active material of the present invention, the carbonates serve as a resistance and may reduce the lithium ion conductivity. For this reason, the amount of carbonate ions that are considered to be derived from a carbonate, or in other words, the amount of $CO_3^{2-}$ is preferably less than 4.0 mass%, more preferably less than 3.0 mass%, even more preferably less than 2.5 mass%, yet even more preferably less than 2.0 mass%, and yet even more preferably less than 1.0 mass%, based on the amount of the active material of the present invention. For reducing the amount of lithium carbonate present on the surface of the active material, it is preferable to, for example, fire in an atmosphere containing no carbon dioxide, such as an oxygen atmosphere, and furthermore, it is preferable to hydrolyze while irradiating with ultrasonic.

<Method for Producing Active Material>

The active material of the present invention can be produced, for example, by preparing a core particle powder of a lithium-metal complex oxide having a layered structure and containing Li, the element M (M is one or more elements selected from the group consisting of Ni, Co, Mn, and Al), and O, adding the core particle to a mixed solution of a lithium material and an element A material in a solvent, and then performing drying and firing under predetermined conditions. Alternatively, the active material of the present invention can be produced by adding the core particle to the mixed solution of a lithium material and an element A material in a solvent, and then performing drying and firing under predetermined conditions, thereby performing a surface coating treatment on the core particle. These production methods are preferred examples, and the method for producing the active material is, however, not limited to these production methods. For example, it is also possible to produce the active material of the present invention using a coating method involving use of tumbling fluidized bed (sol-gel method), a mechanofusion method, a CVD method, a PVD method, and other methods, under appropriately adjusted conditions.

<Method for Producing Core particle>

An exemplary method for producing the core particle is a production method including mixing materials, wet-pulverizing, granulation, firing, heat treatment, washing and drying, and pulverization. This production method is a preferred example, and the method for producing the core particle is not limited to this method.

<Surface Coating Treatment>

In order to coat the surface of the core particle prepared as described above with a LiAO compound, the core particle powder can be added to a mixed solution of a lithium material and an element A material in a solvent, followed by drying and firing under predetermined conditions. For example, the active material can be favorably produced in the following manner: a water-soluble salt of the element A and a lithium material are dissolved in water to prepare a surface treatment liquid, the core particle is put into the surface treatment liquid and kneaded to prepare a slurry, and then the slurry is dried. However, the method for producing the active material is not limited to this method. For example, it is also possible to produce the active material using a coating method involving use of tumbling fluidized bed (sol-gel method), a mechanofusion method, a CVD method, a PVD method, and other methods, under appropriately adjusted conditions.

More specifically, it is preferable to dissolve a lithium material and an element A material in a solvent under stirring in the ratio between the amount of Li and the amount of the element A within a predetermined range, and then put the core particle powder into the resulting solution. In the method for producing the active material of the present invention, putting the core particle powder into the solvent is preferable because the core particle can be surface-treated after residual impurities on the surface of the core particle have been dissolved in the solvent. By this method, the pH of the active material of the present invention can be reduced to improve the end-of-discharge characteristics and the cycle characteristics. For example, by a method in which a solution of a complex is simply sprayed onto active material particles as cores, as disclosed in JP 2016-170973A, the above-described effects may not be obtained. However, the method for reducing pH is not limited to this method.

<Applicability of Active Material>

The active material of the present invention can be typically used as a positive electrode active material. The active material of the present invention is used in a solid-state battery. In particular, the active material of the present invention is advantageously used in a solid-state battery containing a solid electrolyte as a solid electrolyte. In the solid-state battery, contact between the active material of the present invention and the solid electrolyte can bring about the effects of the present invention. The wording "contact between the active material and the solid electrolyte" means any one of: (a) a state in which an electrode mixture, such as a positive electrode mixture, contains the solid electrolyte (in this case, the solid electrolyte layer may be a sulfide or a non-sulfide); (b) a state in which an electrode mixture, such as a positive electrode mixture, does not contain the solid electrolyte, and the solid electrolyte layer contains the solid electrolyte; and (c) a state in which an electrode mixture, such as a positive electrode mixture, contains the solid electrolyte, and the solid electrolyte layer contains the solid electrolyte.

B. Electrode Mixture

An electrode mixture, such as a positive electrode mixture, of the present invention contains an active material and a solid electrolyte. The active material contained in the electrode mixture may be the same as that described hereinbefore in the section "A. Active Material", and thus descriptions thereof will be omitted here.

The solid electrolyte used in the present invention may be the same as a solid electrolyte used in ordinary solid-state batteries. Examples of the solid electrolyte that may be used in the present invention include sulfide solid electrolytes, oxide solid electrolytes, nitride solid electrolytes, and halide solid electrolytes. Of these solid electrolytes, a sulfide solid electrolyte, which contains elemental sulfur (S), is preferable. The sulfide solid electrolyte in the present invention may be, for example, a sulfide solid electrolyte that contains elemental lithium (Li) and elemental sulfur (S) and has lithium ion conductivity, or a sulfide solid electrolyte that contains elemental lithium (Li), elemental phosphorus (P), and elemental sulfur (S) and has lithium ion conductivity. The sulfide solid electrolyte may be any of crystalline material, glass ceramic, and glass. The sulfide solid electrolyte may have a crystal phase with an argyrodite-type structure. Examples of such a sulfide solid electrolyte include $Li_2S$-$P_2S_5$, $Li_2S$-$P_2S_5$-LiX ("X" is one or more elemental halogens), $Li_2S$-$P_2S_5$-$P_2O_5$, $Li_2S$-$Li_3PO_4$-$P_2S_5$, $Li_3PS_4$, $Li_4P_2S_6$, $Li_{10}GeP_2Si_2$, $Li_{3.25}Ge_{0.25}P_{0.75}S_4$, $Li_7P_3S_{11}$, $Li_{3.25}P_{0.95}S_4$, and $Li_{7-x}PS_{6-x}X_x$ (a solid electrolyte having a crystal phase with an argyrodite-type structure, where "X" is one or more elemental halogens, and $0.2 < x < 2.0$ or $0.2 < x < 1.8$).

The active material contained in the electrode mixture of the present invention may be the active material of the present invention alone, or may be a combination thereof with another active material. Examples of the other active material include particles of the above-described known lithium-transition metal complex oxides, and the particles may or may not have a coating layer. When used in combination, the active material of the present invention is preferably contained in an amount of 50 mol% or greater, and more preferably 70 mol% or greater, with respect to the entire active material.

The content of the sulfide solid electrolyte in the electrode mixture of the present invention is typically from 5 to 50 mass%. The electrode mixture may also contain other materials, such as a conductivity aid and a binder, when necessary. An electrode layer such as a positive electrode layer can be formed by mixing the electrode mixture and a solvent to prepare a paste, applying the paste to a current collector, such as aluminum foil, and drying the resultant.

C. Solid-State Battery

The solid-state battery of the present invention contains a positive electrode layer, a negative electrode layer, and a solid electrolyte layer, wherein the positive electrode layer contains the above-described positive electrode mixture.

The solid-state battery of the present invention can be produced, for example, by stacking three layers, i.e., the positive electrode layer produced as described above, a solid electrolyte layer, and a negative electrode layer and compression-molding the stack. The term "solid-state battery" encompasses a solid-state battery that does not contain any liquid substance or gel substance as the electrolyte and also a battery that contains a liquid substance or a gel substance as the electrolyte in an amount of, for example, 50 mass% or less, 30 mass% or less, or 10 mass% or less.

A negative electrode active material used in the negative electrode layer may be the same as a negative electrode active material used in ordinary solid-state batteries. The negative electrode active material may be known materials, and specific examples thereof include as materials that intercalate and deintercalate lithium ions, for example, carbon materials, silicon and silicon oxide-based compounds such as Si-O, tin compounds, and lithium titanate. Examples of the carbon materials include: those obtained by sintering organic high molecular compounds such as polyacrylonitrile, a phenol resin, a phenol novolac resin, and cellulose; and artificial graphite and natural graphite. The negative electrode layer can be produced in the same manner as for the positive electrode layer, except that such a negative electrode active material is used.

Examples

Hereinafter, the present invention will be described in greater detail by way of examples. However, the scope of the present invention is not limited to the examples below.

Example 1

Lithium carbonate having an average particle size ($D_{50}$) of 7 $\mu$m, electrolytic manganese dioxide having an average particle size ($D_{50}$) of 23 $\mu$m and a specific surface area of 40 m$^2$/g, nickel hydroxide having an average particle size ($D_{50}$) of 22 $\mu$m, and titanium oxide having an average particle size ($D_{50}$) of 2 $\mu$m were separately weighed.

To ion-exchanged water, an aqueous solution of polycarboxylic acid ammonium salt (SN-DISPERSANT 5468, manufactured by San Nopco Limited) was added as a dispersant. At this time, the amount of the dispersant added corresponded to 6 mass% with respect to the total amount of the above-described Li material, Ni material, Mn material, and Ti material, and the dispersant was sufficiently dissolved in and mixed with the ion-exchanged water. Then, the previously weighed Ni and Mn materials were added to the ion-exchanged water in which the dispersant was dissolved beforehand, followed by mixing and stirring, and then, pulverization was performed at 1300 rpm for 120 minutes using a wet pulverizer, to thereby obtain a pulverized slurry having an average particle size ($D_{50}$) of 0.60 $\mu$m or less. Subsequently, the other materials were added to the slurry, followed by stirring, and then, pulverization was performed at 1300 rpm for 120 minutes, to thereby obtain a pulverized slurry having an average particle size ($D_{50}$) of 0.60 $\mu$m or less. At this time, the solid content was 40 mass%.

The obtained pulverized slurry was granulated and dried using a hot spray drying machine (a spray dryer "RL-10", manufactured by Ohkawara Kakohki Co., Ltd.). At this time, the granulation and drying was performed using a twin-jet nozzle for spraying at a spraying pressure of 0.46 MPa and a rate of the slurry supplied of 340 mL/min while controlling the temperature such that the temperature of the outlet of the drying tower was from 100°C to 110°C.

The obtained granulated powder was fired in an air atmosphere using a stationary electric furnace such that the temperature was kept at 900°C for 37 hours, and the fired product was then disintegrated using a disintegrator (Orient vertical pulverizer, manufactured by Orient Funsaiki K.K.).

After the disintegration, the disintegrated product was heat-treated in an air atmosphere using a stationary electric furnace such that the temperature was kept at 750°C for 37 hours (first heat treatment), and the resultant was then disintegrated using a disintegrator (Orient vertical pulverizer, manufactured by Orient Funsaiki K.K.).

After the disintegration, the disintegrated product was added to 2000 mL of ion-exchanged water having a pH of 6 to 7 and a temperature of 25°C in a plastic beaker (volume: 5000 mL), and the resultant was stirred using a stirrer (propeller area: 33 cm$^2$) at a rotation speed of 400 to 550 rpm for 20 minutes. After that, the stirring was stopped, the stirrer was removed from the water, and the resulting mixture was allowed to stand for 10 minutes. Then, the supernatant liquid was removed by decantation. The sediment was collected from the residue using a suction filtration device (filter paper No. 13 1), and the collected sediment was dried in an environment at 120°C for 12 hours. Then, the sediment was dried for 7 hours in a state in which the sediment was heated to keep a product temperature of 500°C.

After the drying, the dried product was disintegrated using Counter Jet Mill (a pulverizer/classifier, manufactured by Hosokawa Micron Corporation) (conditions for disintegration: rotation speed of classifier 11000 rpm), followed by classification using a sieve having an aperture size of 53 $\mu$m.

After that, the resulting product was heat-treated in a tubular-type stationary furnace while oxygen was allowed to flow into the furnace at a feed rate of 0.5 L/min, such that a set temperature of the furnace of 725°C was kept for 5 hours (second heat treatment).

The powder after the second heat treatment was classified using a sieve having an aperture size of 53 $\mu$m, and the powder under the sieve was collected to thereby provide a lithium manganese-containing complex oxide. As will be described later, the lithium manganese-containing complex oxide was identified as a spinel-type lithium manganese-containing complex oxide through XRD analysis. The same holds true for Examples and Comparative Examples below.

This spinel-type lithium manganese-containing complex oxide, that is, a core particle, was subjected to chemical analysis, and the results were as follows: Li: 4.2 mass%, Mn: 41.6 mass%, Ni: 13.5 mass%, and Ti: 5.1 mass%. It was confirmed from a SEM image of cross-sections of primary particles thereof that the core particle was polycrystalline.

The aforementioned temperatures during the firing and during the heat treatments each were the temperature of the object under treatment as measured by bringing a thermocouple into contact with the object in the furnace. The same holds true for Examples and Comparative Example, which will be described later.

Production of Positive Electrode Active Material

First, 13.5 g of LiOH·H$_2$O and 29.3 g of fluorine-containing ammonium peroxoniobate were dissolved in 586 mL of water to obtain an aqueous solution. The aqueous solution was heated at 90°C or higher for 2 hours and then cooled, to obtain Li-Nb-O crystals. Then, 10 g of the core particle obtained in (1B) was added to 45 mL of an aqueous solution of lithium hydroxide having a Li concentration of 11.4 g/L, to prepare a slurry. The slurry was heated to 90°C or higher, and 15 mL of an aqueous solution of Li-Nb-O was added to the heated slurry. The aqueous solution of Li-Nb-O was prepared by mixing 0.6 g of the Li-Nb-O crystals with 17 mL of water. Furthermore, the resulting slurry was heated at 90°C or higher for 10 minutes. Through heating at 90°C or higher, a Li-Nb-O compound, which tends to be adsorbed to the surface of a positive electrode active material, was produced on the surface of the core particle. The liquid was decanted, and the residue was washed twice with 90 mL of a 0.14 mol/L lithium sulfate solution. Then, after drying at 130°C, the resultant was heat-treated at 200°C for 2 hours, to obtain a positive electrode active material. This sample had one peak in the range of 0.145 to 0.185 nm and also one peak in the range of 0.280 to 0.310 nm, in the radial distribution function obtained through measurement of an XAFS thereof.

Example 2

A positive electrode active material was obtained in the same manner as in Example 1, except that the heat treatment (second heat treatment) was performed in the tubular-type stationary furnace for a temperature keeping time of 6 hours, and that, in the production of the positive electrode active material, the heat treatment after drying at 130°C was performed at 350°C for 2 hours. This sample had one peak in the range of 0.145 to 0.185 nm and also one peak in the range of 0.280 to 0.310 nm, in the radial distribution function obtained through measurement of an XAFS thereof.

Example 3

A positive electrode active material was obtained in the same manner as in Example 1, except that the heat treatment (first heat treatment) was performed in an air atmosphere using the stationary electric furnace such that the temperature was kept at 750°C for 38 hours, and that in the production of the positive electrode active material, the heat treatment after drying at 130°C was performed at 500°C for 2 hours. This sample had one peak in the range of 0.145 to 0.185 nm and also one peak in the range of 0.280 to 0.310 nm, in the radial distribution function obtained through measurement of an XAFS thereof.

Example 4

A positive electrode active material was obtained in the same manner as in Example 1, except that the heat treatment (first heat treatment) was performed in an air atmosphere using the stationary electric furnace such that the temperature was kept at 750°C for 36 hours, and that in the production of the positive electrode active material, the heat treatment after drying at 130°C was performed at 700°C for 2 hours. This sample had one peak in the range of 0.145 to 0.185 nm and also one peak in the range of 0.280 to 0.310 nm, in the radial distribution function obtained through measurement of an XAFS thereof.

Comparative Example 1

Lithium carbonate having an average particle size (D$_{50}$) of 7 $\mu$m, electrolytic manganese dioxide having an average particle size (D$_{50}$) of 23 $\mu$m and a specific surface area of 40 m$^2$/g, and nickel hydroxide having an average particle size (D$_{50}$) of 22 $\mu$m were separately weighed.

To ion-exchanged water, an aqueous solution of polycarboxylic acid ammonium salt (SN-DISPERSANT 5468, manufactured by San Nopco Limited) was added as a dispersant. At this time, the amount of the dispersant added corresponded to 6 mass% with respect to the total amount of the above-described Li material, Ni material, and Mn material, and the dispersant was sufficiently dissolved in and mixed with the ion-exchanged water. Then, the previously weighed materials were added into the ion-exchanged water in which the dispersant was dissolved beforehand, followed by mixing and stirring, to thereby prepare a slurry having a solid content of 40 mass%.

The slurry was pulverized at 1300 rpm for 120 minutes using a wet pulverizer to adjust the average particle size

($D_{50}$) thereof to 0.60 $\mu$m or less.

The obtained pulverized slurry was granulated and dried using a hot spray drying machine (a spray dryer "RL-10", manufactured by Ohkawara Kakohki Co., Ltd.). At this time, the granulation and drying was performed using a twin-jet nozzle for spraying at a spraying pressure of 0.19 MPa and a rate of the slurry supplied of 350 mL/min while controlling the temperature such that the temperature of the outlet of the drying tower was from 100°C to 110°C.

The obtained granulated powder was fired in an atmosphere with an oxygen partial pressure of 0.021 MPa using a stationary electric furnace such that the temperature was kept at 950°C for 37 hours, and the fired powder was then heat-treated in an atmosphere with an oxygen partial pressure of 0.021 MPa such that the temperature was kept at 750°C for 37 hours.

The fired powder after the heat treatment was classified using a sieve having an aperture size of 53 $\mu$m, and the powder under the sieve was collected to thereby obtain a spinel-type lithium manganese-containing complex oxide powder as a positive electrode active material (sample).

The spinel-type lithium manganese-containing complex oxide powder was provided. The spinel-type lithium manganese-containing complex oxide powder was subjected to chemical analysis, and the results were as follows: Li: 3.9 mass%, Ni: 16.0 mass%, and Mn: 43.0 mass%. This sample had no peaks in the range of 0.145 to 0.185 nm or in the range of 0.280 to 0.310 nm in the radial distribution function obtained through measurement of an XAFS thereof.

Example 5

First, sodium hydroxide and ammonium were supplied to an aqueous solution of nickel sulfate, cobalt sulfate, and manganese sulfate, and a metal complex hydroxide having a molar ratio Ni:Co:Mn of 0.6:0.2:0.2 was produced therefrom by coprecipitation.

Next, lithium carbonate and the metal complex hydroxide were weighed, and sufficiently mixed using a ball mill. The obtained mixed powder was preliminarily fired at 720°C for 10 hours using a stationary electric furnace.

The preliminarily-fired powder was disintegrated, and fired again at 920°C for 22 hours using a stationary electric furnace. The fired mass obtained through firing was placed in a mortar and disintegrated with a pestle, and the resultant was classified using a sieve having an aperture size of 53 $\mu$m. The lithium metal oxide powder under the sieve was collected. This lithium metal oxide was identified as a lithium metal oxide having a layered structure through XRD analysis, which will be described later. Accordingly, this lithium metal oxide will be referred to as a layered lithium metal oxide. The same holds true for examples and comparative examples below.

$D_{50}$ of the collected layered lithium metal oxide powder, that is, a core particle, was 6.8 $\mu$m. It was confirmed from a SEM image of cross-sections of primary particles thereof that the core particle was polycrystalline.

3.68 g of LiOH·$H_2$O and 24 g of ammonium peroxoniobate were dissolved in 2000 ml of water to prepare a treatment liquid. Hereinafter, this treatment liquid will be referred to as a treatment liquid A. The treatment liquid A was added to 200 g of the core particle obtained as described above, and the resulting mixture was heated at 90°C or higher. Through heating at 90°C or higher, the lithium material and ammonium peroxoniobate react with each other in the solution. Thus, a Li-Nb-O compound, which tends to be adsorbed to the surface of the core particle, was produced on the surface of the core particles. Subsequently, the resultant was dried at 310°C through spray drying granulation, to thereby obtain a positive electrode active material. Except for these operations, the positive electrode active material was obtained in the same manner as in Example 1. This sample had one peak in the range of 0.145 to 0.185 nm and also one peak in the range of 0.280 to 0.310 nm, in the radial distribution function obtained through measurement of an XAFS thereof.

Example 6

A positive electrode active material was obtained in the same manner as in Example 5, except for the following: the composition of the core particle was Ni:Co:Mn = 0.33:0.33:0.33; $D_{50}$ of the collected layered lithium metal oxide powder, that is, a core particle, was 2.5 $\mu$m; and the drying through spray drying granulation was performed at 110°C, and heat treatment was then performed at 350°C. This sample had one peak in the range of 0.145 to 0.185 nm and also one peak in the range of 0.280 to 0.310 nm, in the radial distribution function obtained through measurement of an XAFS thereof.

Example 7

A positive electrode active material was obtained in the same manner as in Example 5, except for the following: $D_{50}$ of the collected layered lithium metal oxide powder, that is, the core particle was 2.4 $\mu$m; and the drying through spray drying granulation was performed at 320°C, followed by vacuum drying at 120°C for 2 hours. This sample had one peak in the range of 0.145 to 0.185 nm and also one peak in the range of 0.280 to 0.310 nm, in the radial distribution function obtained through measurement of an XAFS thereof.

Comparative Example 2

A positive electrode active material was obtained in the same manner as in Example 5, except for the following.

5 g of ammonium peroxoniobate and 0.70 g of lithium hydroxide were dissolved in 100 mL of ion-exchanged water to prepare a surface treatment liquid. Hereinafter, this surface treatment liquid will be referred to as a treatment liquid B. 20 g of the core particle was added to 33 mL of the treatment liquid B, and the resulting mixture was heated at 90°C or higher. Through heating at 90°C or higher, the lithium material and ammonium peroxoniobate react with each other in the solution. Thus, a Li-Nb-O compound, which tends to be adsorbed to the surface of the core particle, was produced on the surface of the core particle. Subsequently, the resultant was dried at 120°C using a hot-air furnace, and further subjected to a heat treatment at 500°C for 5 hours.

This sample had no peak in the range of 0.145 to 0.185 nm or one peak in the range of 0.280 to 0.310 nm, in the radial distribution function obtained through measurement of an XAFS thereof.

<Methods for Measuring Various Material Properties>

Various material properties of the positive electrode active materials obtained in Examples and Comparative Examples were determined in the following manners.

(Composition Analysis)

The amounts of elements contained in each of the positive electrode active materials obtained in Examples and Comparative Examples were measured through inductively coupled plasma (ICP) optical emission spectroscopy.

(Mode Diameter, $D_{50}$, and $D_{10}$)

The mode diameter, $D_{50}$, and $D_{10}$ were determined on each of the positive electrode active materials obtained in Examples and Comparative Examples. Specifically, using an automatic sample feeder ("Microtrac SDC" manufactured by MicrotracBEL Corporation) for a laser diffraction particle size distribution analyzer, the sample (powder) was added to a water-soluble solvent and then, the resulting mixture was exposed to ultrasonic waves at 40W for 360 seconds a plurality of times while flowing at a rate of 40%. After that, the particle size distribution was measured using a laser diffraction particle size distribution analyzer "MT3000 II" manufactured by MicrotracBEL Corporation, and the mode diameter, $D_{50}$, and $D_{10}$ were determined from the obtained chart of the particle size distribution by volume.

The number of times of the exposure to ultrasonic waves was set to a number sufficient to allow the change of $D_{50}$ before and after the treatment with ultrasonic to be 8% or less.

For the measurement, the water-soluble solvent was passed through a 60-$\mu$m filter before use, the "Solvent Refractive Index" was 1.33, the particle transparency condition was "Transparent", the particle refractive index was 2.46, the "Shape" was "Non-Spherical", the measuring range was from 0.133 to 704.0 $\mu$m, and the measuring time was 30 seconds.

(Average Primary Particle Size)

The average primary particle size of each of the positive electrode active materials obtained in Examples and Comparative Examples was measured in the following manner.

The sample (powder) was observed at 1000x using an SEM (scanning electron microscope), and particles of a size corresponding to the $D_{50}$ were selected. Next, images of the particles were captured with a magnification varied in the range from 2000x to 10000x depending on the $D_{50}$. For example, when the $D_{50}$ is about 7 $\mu$m, an image is captured at a magnification of 10000x; when the $D_{50}$ is about 15 $\mu$m, an image is captured at a magnification of 5000x; and when the $D_{50}$ is about 22 $\mu$m, an image is captured at a magnification of 2000x. In this manner, images suitable for finding the average primary particle size using image analysis software, which will be described later, can be captured.

The average primary particle size of the selected particles was obtained from the captured images using a piece of image analysis software (MAC-VIEW ver.4, manufactured by Mountech Co., Ltd.). Note that this average primary particle size refers to the particle diameter (Heywood diameter: equivalent circle diameter) at 50% cumulated in the distribution by volume.

In obtaining the average primary particle size, it is preferable to measure the primary particle size of thirty or more primary particles and calculate a mean value. In the case where the number of particles subjected to the measurement was insufficient, additional particles of a size corresponding to the $D_{50}$ were selected and images thereof were captured so that the total number of primary particles subjected to the measurement was 30 or greater.

(Identification of Crystal Structure)

The crystal structures of the core particles obtained in Examples and Comparative Examples were identified in the following manner using an X-ray diffractometer.

XRD analysis was performed using a diffractometer "Ultima IV, manufactured by Rigaku Corporation" under analysis conditions 1 below, to obtain an XRD pattern. Crystal phase information on the obtained XRD pattern was determined using a piece of integrated X-ray powder diffraction software PDXL (manufactured by Rigaku Corporation).

With regard to the crystal phase information about the core particle A, the following was presumed: it had a cubic crystal with the space group Fd-3m (Origin Choice 2); Li occupied the 8a sites; Mn, the elemental metal M1, the elemental metal M2, and excess Li occupied the 16d sites; and O occupied the 32e sites. The occupancy for each site and the atomic displacement parameters B were set to 1. Calculation was repeated until Rwp and S, which indicate the degree of agreement between the found intensity and the calculated intensity, converged.

With regard to the crystal phase information about the core particle B, the following was presumed: it has a hexagonal crystal with the space group R-3m; Li occupied the 3a sites; Ni, Co, Mn, the element M, and excess Li occupied the 3b sites; and O occupied the 6c sites. The occupancies at the 3a, 3b, and 6c sites and the atomic displacement parameters B were set to 1. Calculation was repeated until Rwp and S, which indicate the degree of agreement between the found intensity and the calculated intensity, converged.

A sufficient degree of agreement between the found intensity and the calculated intensity means that the obtained sample reliably has a spinel-type crystal structure, irrespective of its space group.

XRD Analysis Conditions 1

X-ray source: CuK$\alpha$ (line focus), Wavelength: 1.541836 Å
Operation axis: 2$\theta$/$\theta$, Measurement method: continuous, Counting unit: cps
Start angle: 15.0°, End angle: 120.0°, Number of times of integration: 1
Sampling width: 0.01°, Scan speed: 1.0°/min
Voltage: 40 kV, Current: 40 mA
Divergence slit: 0.2 mm, Divergence vertical restriction slit: 10 mm
Scattering slit: open, Light-receiving slit: open
Offset angle: 0°
Goniometer radius: 285 mm, Optical system: convergence method
Attachment: ASC-48
Slit: slit for D/teX Ultra
Detector: D/teX Ultra
Incident monochromator: CBO
Ni-K$\beta$ filter: not used
Rotation speed: 50 rpm

(Crystallite Size)

The analysis for obtaining X-ray diffraction pattern for determining the crystallite size was performed under analysis conditions 2 below using an X-ray diffractometer (D8 ADVANCE, manufactured by Bruker AXS K.K.) with Cu-K$\alpha$ radiation.

Peaks in the X-ray diffraction pattern obtained in a range of diffraction angle 2$\theta$ = 10° to 120° were analyzed using a piece of analysis software (product name "Topas Version 3") to determine the crystallite size and strain of the sample.

With regard to the crystal structure about the core particles A, the following was presumed: it had a cubic crystal with the space group Fd-3m (Origin Choice 2); Li was present at the 8a sites; Mn, the elemental metal M1, the elemental metal M2, and excess Li were present at the 16d sites; and O occupied the 32e sites. The parameters Beq. were fixed to 1, and the fractional coordinates and the occupancies of O at the 32e sites were set to variables. Calculation was repeated until the indicators Rwp and GOF, which indicate the degree of agreement between the found intensity and the calculated intensity, converged to Rwp < 10.0 and GOF < 2.8.

With regard to the crystal structure information about the core particles B, the following was presumed: it has a hexagonal crystal with the space group R-3m (Origin Choice 2); Li occupied the 3a sites; Ni, Co, Mn, the element M, and excess Li occupied the 3b sites; and O occupied the 6c sites. The occupancies at the 3a and 3b sites and the atomic displacement parameters B were set to 1, and the fractional coordinates and the occupancies at the 6c sites were set to variables. Calculation was repeated until Rwp and GOF, which indicate the degree of agreement between the found intensity and the calculated intensity, converged.

The crystallite size was calculated by an analysis using a Gaussian function.

XRD Analysis Conditions 2

X-ray source: CuKα,
Operation axis: 2θ/θ, Measurement method: continuous, Counting unit: cps
Start angle: 10°, End angle: 120°
Detector: PSD
Detector Type: VANTEC-1
High Voltage: 5585 V
Discr. Lower Level: 0.25 V
Discr. Window Width: 0.15 V
Grid Lower Level: 0.075 V
Grid Window Width: 0.524 V
Flood Field Correction: Disabled
Primary radius: 250 mm
Secondary radius: 250 mm
Receiving Slit Width: 0.1436626 mm
Divergence Slit: 0.3°
Filament Length: 12 mm
Sample Length: 25 mm
Receiving Slit Length: 12 mm
Primary Sollers: 2.623°
Secondary Sollers: 2.623°
Lorentzian, 1/Cos: 0.004933548$^{Th}$
Voltage: 40 kV, Current: 35 mA

<Production and Evaluation of Solid-State Lithium Secondary Batteries>

Positive electrode mixtures were produced using the positive electrode active materials obtained in Examples and Comparative Examples and a solid electrolyte. Then, solid-state lithium secondary batteries (solid Gr/positive electrode active material cells) were produced, and the battery characteristics were evaluated.

(Materials)

The positive electrode active materials produced in Examples and Comparative Examples were used as positive electrode active materials, a graphite (Gr) powder was used as a negative electrode active material, and a sulfide solid electrolyte having an argyrodite-type structure was used as a solid electrolyte powder.

A positive electrode mixture powder was prepared by mixing in a mortar the positive electrode active material produced in Examples and Comparative Examples, the solid electrolyte powder, and a conductive material (carbon material) powder in a ratio of 60 mass% : 30 mass% : 10 mass%.

A negative electrode mixture powder was prepared by mixing in a mortar the graphite (Gr) powder and the solid electrolyte powder in a ratio of 50 mass% : 50 mass%.

(Production of Solid-State Lithium Secondary Batteries)

First, 13 mg of the positive electrode mixture powder (sample) was filled into an insulated cylinder (diameter: 9 mm) of a sealed cell, and uniaxially molded at 368 MPa, to thereby produce a positive electrode mixture powder pellet. The obtained positive electrode mixture powder pellet was transferred into an insulated cylinder (diameter: 10.5 mm) of a sealed cell, and 50 mg of the solid electrolyte powder was filled on the positive electrode mixture powder pellet.

Next, the solid electrolyte powder was uniaxially molded at 184 MPa together with the positive electrode mixture powder pellet. Furthermore, 10 mg of the negative electrode mixture powder was filled on the solid electrolyte, and uniaxially molded at 551 MPa, and the resultant was fastened with a pressurizing screw to obtain a solid-state battery (solid-state lithium secondary battery) including a positive electrode layer, a negative electrode layer, and a solid electrolyte layer.

(Evaluation of Battery Characteristics)

For the solid-state batteries of Examples 1 to 4, constant-current charging at 0.1 C was performed to a charge cut-off voltage of 5.0 V, in the first cycle. Then, constant-voltage charging at 5.0 V was performed to a current value of 0.01 C. The capacity obtained through constant-current charging up to 5.0 V was used as the CC capacity. The CC capacity was divided by the total charge capacity of the first cycle and multiplied by 100, and the resulting value was used as the charge characteristics. The value of the charge characteristics of Comparative Example 1 was subtracted from the values of the charge characteristics of Examples 1 to 4, and the resulting values were divided by the value of the charge characteristics of Comparative Example 1 and multiplied by 100. The thus obtained values were used as an index of improvement in charge characteristics and shown in Table 1. The index of improvement in charge characteristics indicates the improvement in the mobility (desorbability) of lithium ions during charging, and fast charging can be evaluated based on the index of improvement in charge characteristics. For the solid-state batteries of Examples 5 to 7, in the first cycle, constant-current charging at 0.3 C was performed to a charge cut-off voltage of 4.5 V. Then, constant-voltage charging at 4.5 V was performed to a current value of 0.01 C. The indices of improvement in charge characteristics in Examples 5 to 7 relative to the charge characteristics of Comparative Example 2 were calculated in the same manner as in Examples 1 to 4 and shown in Table 1.

Table 1

| | | Ex. 1 | Ex. 2 | Ex. 3 | Ex. 4 | Com. Ex. 1 | Ex. 5 | Ex. 6 | Ex. 7 | Com. Ex. 2 |
|---|---|---|---|---|---|---|---|---|---|---|
| Core material | | Spinel-type lithium manganese-containing complex oxide | | | | | Layered lithium metal oxide | | | |
| Secondary particle size ($D_{50}$) | $\mu$m | 3.7 | 3.8 | 3.7 | 4.1 | 16.7 | 7.8 | 4.7 | 2.9 | 2.2 |
| Secondary particle size ($D_{10}$) | $\mu$m | 2.4 | 2.5 | 2.5 | 2.4 | 9.2 | 4.9 | 2.6 | 2.0 | 1.0 |
| Mode diameter | $\mu$m | 3.9 | 3.9 | 3.9 | 3..6 | 18.5 | 8.5 | 5.5 | 2.8 | 2.3 |
| (\|mode diameter - $D_{50}$\|) / mode diameter x 100 | % | 5.1 | 2.6 | 5.1 | 13.9 | 9.6 | 8.6 | 15.0 | 6.4 | 6.8 |
| (\|mode diameter - $D_{10}$\|) / mode diameter $\times$ 100 | % | 38.5 | 35.9 | 35.9 | 33.3 | 50.0 | 42.1 | 53.3 | 27.7 | 58.4 |
| Crystallite size | nm | 137 | 134 | 135 | 143 | 202 | 234 | 208 | 224 | 192 |
| Average primary particle size | $\mu$m | 2.5 | 1.8 | 2.7 | 2.0 | 4.5 | 1.0 | 0.8 | 1.9 | 1.3 |
| Average primary particle size / $D_{50}$ | | 0.7 | 0.5 | 0.7 | 0.5 | 0.3 | 0.1 | 0.2 | 0.6 | 0.6 |
| Crystallite size ($\mu$m) / average primary particle size ($\mu$m) | | 0.05 | 0.07 | 0.05 | 0.07 | 0.04 | 0.23 | 0.26 | 0.12 | 0.15 |
| Charge characteristics | | 95.8 | 97.8 | 93.1 | 86.8 | 68.0 | 91.4 | 88.0 | 90.5 | 82.0 |
| Index of improvement in charge characteristics (vs. Com. Ex. 1) | | 40.9 | 43.8 | 36.9 | 27.6 | 0.0 | - | - | - | - |
| Index of improvement in charge characteristics (vs. Com. Ex. 2) | | - | - | - | - | - | 11.5 | 7.4 | 10.4 | 0.0 |

As is clear from the results shown in Table 1, the solid-state batteries including the positive electrode active materials obtained in Examples had superior charge characteristics to those of Comparative Examples, and were thus found to be suitable for fast charging.

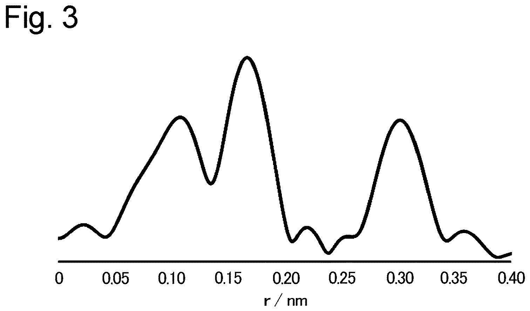

Fig. 3 shows a radial distribution function obtained through measurement of an XAFS of the positive electrode active material of Example 3.

Industrial Applicability

As described in detail above, the present invention provides an active material having improved desorbability of lithium ions during charging. Therefore, a fast-charging solid-state battery can be realized by using the active material of the present invention.

**Claims**

1. An active material for use in a solid-state battery, comprising a core particle and a coating layer on a surface of the core particle,

   the core particle containing a lithium-metal complex oxide,
   the lithium-metal complex oxide comprising:

   a spinel-type complex oxide that contains Li, Mn, and O, and one or more elements other than Li, Mn, and O; or
   a lithium-nickel metal complex oxide that contains Li, an element M where M includes one or more elements selected from the group consisting at least of Ni, Co, Mn, and Al,

   and O and that has a layered structure,
   the coating layer comprising a compound containing Li, Nb and O, and Li being contained in the coating layer in excess of 1 mol per mole of Nb, and
   the active material exhibiting at least one peak in a range of 0.145 to 0.185 nm and at least one peak in a range of 0.280 to 0.310 nm in a radial distribution function obtained through measurement of an X-ray absorption fine structure thereof,
   wherein, in a particle size distribution, by volume, of the active material obtained through a particle size distribution measurement by laser diffraction scattering method, a ratio of an absolute value of a difference between a mode diameter of the active material and a $D_{10}$ of the active material to the mode diameter in percentage terms, $(|\text{mode diameter} - D_{10}| / \text{mode diameter}) \times 100$, satisfies $0\% < ((|\text{mode diameter} - D_{10}| / \text{mode diameter}) \times 100) \leq 58.0\%$, and wherein the active material has a crystallite size of 80 to 490 nm, and a ratio of the crystallite size to an average primary particle size determined from an image obtained using a scanning electron microscope, crystallite size / average primary particle size, is from 0.01 to 0.50.

2. The active material according to claim 1,

   wherein, in the particle size distribution, by volume, of the active material obtained through a particle size distribution measurement by laser diffraction scattering method,
   a $D_{50}$ of the active material is from 0.5 to 15.0 $\mu$m,
   a ratio of an absolute value of a difference between the mode diameter and the $D_{50}$ to the mode diameter in percentage terms, $(|\text{mode diameter} - D_{50}| / \text{mode diameter}) \times 100$, satisfies $0\% \leq ((|\text{mode diameter} - D_{50}| / \text{mode diameter}) \times 100) \leq 25.0\%$, and
   a ratio of an average primary particle size determined from an image obtained using a scanning electron microscope to the $D_{50}$, average primary particle size / $D_{50}$, is from 0.01 to 0.99.

3. A positive electrode mixture comprising the active material according to any one of claims 1 to 2 and a solid electrolyte.

4. The positive electrode mixture according to claim 3, wherein the solid electrolyte contains elemental lithium (Li), elemental phosphorus (P), and elemental sulfur (S), and has lithium ion conductivity.

5. The positive electrode mixture according to claim 4, wherein the solid electrolyte has a crystal phase with an argyrodite-type structure.

6. A solid-state battery comprising a positive electrode layer, a negative electrode layer, and a solid electrolyte layer, wherein the positive electrode layer contains the active material according to any one of claims 1 to 2.

**Patentansprüche**

1. Aktives Material zur Verwendung in einer Festkörperbatterie, umfassend ein Kernpartikel und eine Überzugsschicht auf einer Oberfläche des Kernpartikels,

   wobei das Kernpartikel ein Lithium-Metall-Komplexoxid enthält,
   wobei das Lithium-Metall-Komplexoxid umfasst:

   ein spinellartiges Komplexoxid, das Li, Mn und O sowie ein oder mehrere andere Elemente als Li, Mn und O enthält; oder
   ein Lithium-Nickel-Metallkomplexoxid, das Li, ein Element M, wobei M umfasst ein oder mehrere Elemente, ausgewählt aus der Gruppe, die mindestens aus Ni, Co, Mn und Al besteht, und O enthält und eine Schichtstruktur aufweist

   die Überzugsschicht eine Verbindung umfasst, die Li, Nb und O enthält, wobei Li in der Überzugsschicht in einer Menge von mehr als 1 Mol pro Mol Nb enthalten ist, und
   wobei das aktive Material mindestens einen Peak in einem Bereich von 0,145 bis 0,185 nm und mindestens einen Peak in einem Bereich von 0,280 bis 0,310 nm in einer Radialverteilungsfunktion aufweist, die durch Messung einer Röntgenabsorptionsfeinstruktur davon erhalten wird,
   wobei in einer Teilchengrößenverteilung, bezogen auf das Volumen, des aktiven Materials, die durch eine Teilchengrößenverteilungsmessung durch ein Laserbeugungsstreuungsverfahren erhalten wird, ein Verhältnis eines Absolutwerts einer Differenz zwischen einem Modendurchmesser des aktiven Materials und einem $D_{10}$ des aktiven Materials zu dem Modendurchmesser in Prozent, ($|$Modendurchmesser $- _{D(10)}|$ / Modendurchmesser) $\times$ 100, 0%$<$ ($($IModendurchmesser$- D_{10}|$ / Modendurchmesser)$\times$ 100) $\leq$ 58 erfüllt.0%, und wobei das aktive Material eine Kristallitgröße von 80 bis 490 nm aufweist und ein Verhältnis der Kristallitgröße zu einer durchschnittlichen Primärteilchengröße, die aus einem unter Verwendung eines Rasterelektronenmikroskops erhaltenen Bild bestimmt wurde, Kristallitgröße / durchschnittliche Primärteilchengröße, von 0,01 bis 0,50 beträgt.

2. Das aktive Material nach Anspruch 1,

   wobei in der Teilchengrößenverteilung, bezogen auf das Volumen, des aktiven Materials die durch eine Teilchengrößenverteilungsmessung mittels Laserbeugungsstreuungsmethode erhalten wurde
   ein $D_{50}$ des aktiven Materials von 0,5 bis 15,0 $\mu$m beträgt,
   ein Verhältnis eines absoluten Wertes einer Differenz zwischen dem Modendurchmesser und dem $D_{50}$ zu dem Modendurchmesser in Prozent, ($|$Modendurchmesser $- _{D(50)}|$ / Modendurchmesser) $\times$ 100, 0% $\leq$ (($|$Modendurchmesser $- _{D(50)}|$ / Modendurchmesser) $\times$ 100) $\leq$ 25,0% erfüllt, und
   ein Verhältnis einer durchschnittlichen Primärteilchengröße, die aus einem unter Verwendung eines Rasterelektronenmikroskops erhaltenen Bild bestimmt wird, zu $D_{50}$, durchschnittliche Primärteilchengröße / $D_{50}$, zwischen 0,01 und 0,99 liegt.

3. Eine positive Elektrodenmischung, die das aktive Material nach einem der Ansprüche 1 bis 2 und einen Festelektrolyten enthält.

4. Die positive Elektrodenmischung nach Anspruch 3,
   wobei der Festelektrolyt elementares Lithium (Li), elementaren Phosphor (P) und elementaren Schwefel (S) enthält und eine Lithiumionenleitfähigkeit aufweist.

5. Die positive Elektrodenmischung nach Anspruch 4,
   wobei der Festelektrolyt eine Kristallphase mit einer Struktur vom Argyrodit-Typ aufweist.

6. Festkörperbatterie mit einer positiven Elektrodenschicht, einer negativen Elektrodenschicht und einer Festelektrolytschicht,
   wobei die positive Elektrodenschicht das aktive Material nach einem der Ansprüche 1 bis 2 enthält.

**Revendications**

1. Matériau actif destiné à être utilisé dans une batterie à l'état solide, comprenant une particule centrale et couche de revêtement sur une surface de la particule centrale,

   la particule centrale contenant un oxyde complexe de lithium-métal, l'oxyde complexe lithium-métal comprenant :

   un oxyde complexe de type spinelle contenant du Li, du Mn et de l'O, et un ou plusieurs éléments autres que le Li, le Mn et l'O ; ou

   un oxyde complexe métallique de lithium-nickel contenant du Li, un élément M où M comprend un ou plusieurs éléments choisis dans le groupe constitué au moins de Ni, Co, Mn et Al, et O et ayant une structure en couches,

   la couche de revêtement comprend un composé contenant du Li, du Nb et de l'O, le Li étant contenu dans la couche de revêtement à raison de plus d'une mole par mole de Nb, et

   la matière active présente au moins un pic dans une plage de 0,145 à 0,185 nm et au moins un pic dans une plage de 0,280 à 0,310 nm dans une fonction de distribution radiale obtenue par la mesure d'une structure fine d'absorption des rayons X de la matière active,

   dans lequel, dans une distribution de la taille des particules, en volume, de la matière active obtenue par une mesure de la distribution de la taille des particules par une méthode de diffusion par diffraction laser, un rapport d'une valeur absolue d'une différence entre un diamètre de mode de la matière active et un $D_{10}$ de la matière active par rapport au diamètre de mode en termes de pourcentage, (|diamètre de mode - $D_{10}$| / diamètre de mode) x 100, satisfait 0% < ((|diamètre de mode - $D_{10}$| / diamètre de mode) x 100) ≤ 58,0 %, et dans lequel la matière active a une taille de cristallite comprise entre 80 et 490 nm, et un rapport entre la taille de cristallite et une taille moyenne de particule primaire déterminée à partir d'une image obtenue à l'aide d'un microscope électronique à balayage, taille de cristallite / taille moyenne de particule primaire, est de 0,01 à 0,50.

2. Matériau actif selon la revendication 1,

   dans lequel, dans la distribution de la taille des particules, en volume, de la matière active obtenue par une mesure de la distribution de la taille des particules par la méthode de diffusion de la diffraction laser,
   un $D_{50}$ du matériau actif est de 0,5 à 15,0 μm,
   un rapport entre la valeur absolue d'une différence entre le diamètre du mode et le $D_{50}$ et le diamètre de mode en termes de pourcentage, (|diamètre de mode - $D_{50}$| / diamètre de mode) x 100, satisfait 0% ≤ ((|diamètre de mode - $D_{50}$| / diamètre de mode) x 100) ≤ 25,0%, et
   un rapport entre la taille moyenne des particules primaires déterminée à partir d'une image obtenue à l'aide d'un microscope électronique à balayage et le $D_{50}$, taille moyenne des particules primaires / $D_{50}$, est de 0,01 à 0,99.

3. Mélange d'électrode positive comprenant le matériau actif selon l'une des revendications 1 à 2 et un électrolyte solide.

4. Mélange d'électrode positive selon la revendication 3, dans lequel l'électrolyte solide contient du lithium élémentaire (Li), du phosphore élémentaire (P) et du soufre élémentaire (S), et présente une conductivité ionique du lithium.

5. Mélange d'électrode positive selon la revendication 4, dans lequel l'électrolyte solide présente une phase cristalline avec une structure de type argyrodite.

6. Batterie à l'état solide comprenant une couche d'électrode positive, une couche d'électrode négative et une couche d'électrolyte solide,
   dans laquelle la couche d'électrode positive contient la matière active selon l'une des revendications 1 à 2.

## Fig. 1

## Fig. 2

## Fig. 3

r / nm

**EP 3 933 979 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019035418 A
- US 2015270537 A
- US 2009081554 A1
- US 2018219229 A1
- WO 2019035418 A1
- US 2015270537 A1
- JP 2016170973 A